# EUROPEAN PATENT APPLICATION

(11) **EP 4 672 346 A1**
(43) Date of publication of application: **31.12.2025**
(21) Application number: 25175993.2
(22) Date of filing: 13.05.2025
(51) Int. Cl.: H01M 4/04, H01M 4/136

(54) **POSITIVE ELECTRODE AND PREPARATION METHOD THEREOF, BATTERY, AND ENERGY-STORAGE DEVICE**

(30) Priority: 24.06.2024 CN 202410826036
(71) Applicant: Xiamen Hithium Energy Storage Technology Co., Ltd., Xiamen, Fujian 361100 (CN)
(72) Inventor: WU, Han, Xiamen, Fujian, 361100 (CN); WANG, Shiwen, Xiamen, Fujian, 361100 (CN)
(74) Representative: Viering, Jentschura & Partner mbB Patent- und Rechtsanwälte

(57) **Abstract**

A positive electrode includes a positive current collector and a positive active layer. The positive active layer is disposed on a preset surface of the positive current collector. The positive active layer includes positive electrode particles partially embedded into the positive current collector. The positive electrode particles are made from sodium iron phosphate pyrophosphate. The positive electrode particles are spheroidal or spherical. The positive electrode satisfies: *b*≤*c*•*α*/180°, where *b* denotes a depth to which the positive electrode particles are embedded into the positive current collector, *α* denotes an included angle between tangents at two points farthest away from each other on an intersection line of the preset surface and a surface of each of the positive electrode particles partially embedded, and c denotes a distance between an intersection of the tangents at two points farthest away from each other on the intersection line and the preset surface.

## Description

### TECHNICAL FIELD

This disclosure relates to the field of energy storage, and in particular, to a positive electrode and a preparation method thereof, a battery, and an energy-storage device.

### BACKGROUND

Sodium iron phosphate pyrophosphate Na₄Fe₃(PO₄)₂(P₂O₇) has a three-dimensional sodium-ion diffusion channel and a sodium superionic conductor structure. The Sodium iron phosphate pyrophosphate Na₄Fe₃(PO₄)₂(P₂O₇) has the characteristics such as a high voltage plateau, a high capacity, an excellent rate, and outstanding cycling stability, and holds significant potential as a positive electrode material for large-scale production in sodium-ion batteries. However, the compacted density of the existing Na₄Fe₃(PO₄)₂(P₂O₇) remains relatively low.

### SUMMARY

Embodiments of the present disclosure provide a positive electrode, which has a higher compacted density and better mechanical performance.

In a first aspect, a positive electrode is provided in embodiments of the present disclosure. The positive electrode includes a positive current collector and a positive active layer. The positive current collector has a preset surface. The positive active layer is disposed on the preset surface of the positive current collector. The positive active layer includes positive electrode particles partially embedded into the positive current collector. The positive electrode particles are made from sodium iron phosphate pyrophosphate. The positive electrode particles are spheroidal or spherical. The positive electrode satisfies a relationship: *b*≤c•*α*/180°. b denotes a depth to which the positive electrode particles are embedded into the positive current collector, *α* denotes an included angle between tangents at two points farthest away from each other on an intersection line of the preset surface and a surface of each of the positive electrode particles partially embedded into the positive current collector, and c denotes a distance between an intersection of the tangents at two points farthest away from each other on the intersection line of the preset surface and the surface of each of the positive electrode particles partially embedded into the positive current collector and the preset surface.

In an embodiment, the positive electrode further satisfies a relationship: *b*/*a*≤1/3, where *a* denotes a thickness of the positive current collector.

In an embodiment, the depth *b* to which the positive electrode particles are embedded into the positive current collector satisfies: *b*≤6µm.

In an embodiment, the included angle *α* between the tangents at two points farthest away from each other on the intersection line of the preset surface and the surface of each of the positive electrode particles partially embedded into the positive current collector satisfies: 45° ≤ *α* ≤ 120°.

In an embodiment, the distance c between the intersection of the tangents at two points farthest away from each other on the intersection line of the preset surface and the surface of each of the positive electrode particles partially embedded into the positive current collector satisfies: *c*≤18µm.

In an embodiment, an average sphericity of the positive electrode particles is greater than or equal to 0.9.

In an embodiment, a molar ratio Na/Fe of a sodium element to an iron element in each of the positive electrode particles satisfies: 1.34≤Na/Fe≤1.5.

In an embodiment, a molar ratio Fe/P of an iron element to a phosphorus element in each of the positive electrode particles satisfies: 0.70 ≤ Fe/P ≤ 0.745.

In a second aspect, a preparation method of a positive electrode is provided in embodiments of the present disclosure. The method includes the following. A positive current collector and a positive electrode slurry are provided. The positive current collector has a preset surface, the positive electrode slurry includes positive electrode particles, and the positive electrode particles are made from sodium iron phosphate pyrophosphate. The positive electrode slurry is coated on the preset surface of the positive current collector, and a solvent in the positive electrode slurry is removed to form a positive active layer. The positive current collector coated with the positive active layer is rolled to make the positive electrode particles partially embedded into the positive current collector to obtain a positive electrode. The positive electrode satisfies a relationship: b < c•α/180°. *b* denotes a depth to which the positive electrode particles are embedded into the positive current collector, *α* denotes an included angle between tangents at two points farthest away from each other on an intersection line of the preset surface and a surface of each of the positive electrode particles partially embedded into the positive current collector, and c denotes a distance between an intersection of the tangents at two points farthest away from each other on the intersection line of the preset surface and the surface of each of the positive electrode particles partially embedded into the positive current collector and the preset surface.

In an embodiment, the positive current collector coated with the positive active layer is rolled to make the positive electrode particles partially embedded into the positive current collector to obtain the positive electrode as follows. The positive current collector coated with the positive active layer is rolled with a rolling pressure *P* satisfying 70 tons ≤ *P* ≤ 150 tons to make the positive electrode particles partially embedded into the positive current collector to obtain the positive electrode.

In a third aspect, a battery is provided in embodiments of the present disclosure. The battery includes an electrolyte, a positive electrode, a separator located at one side of the positive electrode, and a negative electrode disposed at one side of the separator facing away from the positive electrode. The positive electrode includes a positive current collector and a positive active layer. The positive current collector has a preset surface. The positive active layer is disposed on the preset surface of the positive current collector. The positive active layer includes positive electrode particles partially embedded into the positive current collector. The positive electrode particles are made from sodium iron phosphate pyrophosphate. The positive electrode particles are spheroidal or spherical. The positive electrode satisfies a relationship: *b*≤c•*α*/180°. *b* denotes a depth to which the positive electrode particles are embedded into the positive current collector, *α* denotes an included angle between tangents at two points farthest away from each other on an intersection line of the preset surface and a surface of each of the positive electrode particles partially embedded into the positive current collector, and c denotes a distance between an intersection of the tangents at two points farthest away from each other on the intersection line of the preset surface and the surface of each of the positive electrode particles partially embedded into the positive current collector and the preset surface.

In a fourth aspect, an energy-storage device is provided in embodiments of the present disclosure. The energy-storage device includes a case, and multiple batteries in embodiments of the present disclosure. The multiple batteries are accommodated in the case.

In embodiments of the present disclosure, the positive electrode particles of the positive electrode are partially embedded into the positive current collector. The positive electrode particles are embedded into the positive current collector, which occupies part of the space of the positive current collector, and the positive electrode particles are more compact, thereby improving the compacted density of the positive electrode. In addition, due to compression exerted by the positive active layer, the positive current collector is denser, the compacted density of the positive electrode is increased, so that the positive electrode has a higher energy density and a higher capacity per gram, and the resistance of the positive electrode is reduced. In addition, the shape and protrusion extent of the positive electrode particles embedded into the positive current collector greatly affect the winding process of the positive electrode. When part of the positive electrode particles embedded into the positive current collector are in irregular shapes and protrude relatively, tip cracks will be formed at the embedded foils (i. e. the positions where the positive current collector are embedded), so that the positive electrode is likely to be fractured during the winding process. In the present disclosure, spheroidal or spherical sodium iron phosphate pyrophosphate particles are prepared, and the positive electrode satisfies the relationship: *b*≤*c*•*α*/180°, so that the positive electrode has a higher compacted density, part of the positive electrode particles embedded into the positive current collector will not protrude excessively. In this way, tip cracks at the positions where the positive electrode particles are embedded into the positive current collector can be better prevented, so that the positive current collector is less likely to be fractured during the winding process, which result in a better winding process.

### BRIEF DESCRIPTION OF THE DRAWINGS

To describe technical solutions in embodiments of the present disclosure more clearly, the following will briefly introduce accompanying drawings required for describing embodiments. Apparently, the accompanying drawings in the following description show merely some embodiments of the present disclosure, and a person of ordinary skill in the art may still derive other drawings from these accompanying drawings without any creative efforts.
FIG. 1 is a schematic structural diagram of a positive electrode according to an embodiment of the present disclosure.
FIG. 2 is a schematic cross-sectional diagram of a positive electrode according to an embodiment of the present disclosure, taken along a direction A-A in FIG. 1.
FIG. 3 is a schematic flowchart of a preparation method of a positive electrode according to an embodiment of the present disclosure.
FIG. 4 is a scanning electron microscope (SEM) image of a cut surface of a positive electrode according to embodiment 1 of the present disclosure.
FIG. 5 is a schematic structural diagram of a battery according to an embodiment of the present disclosure.
FIG. 6 is a schematic cross-sectional structural diagram of a battery according to an embodiment of the present disclosure, taken along a direction B-B in FIG. 5.
FIG. 7 is a schematic structural diagram of a negative electrode according to an embodiment of the present disclosure.
FIG. 8 is a schematic structural diagram of an energy-storage device according to an embodiment of the present disclosure.

Description of Reference signs of the accompanying drawings: 100-positive electrode, 10-positive current collector, 11-preset surface, 20-positive active layer, 21-positive electrode particles, 300-battery, 320-separator, 330-negative electrode, 331-negative current collector, 332-negative active layer, 340-housing, 350-end cover assembly, 360-electrolyte, 400-energy-storage device, 410-case.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure. Based on embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may optionally include other steps or units that are not listed; In an embodiment, other steps or units inherent to the process, method, product, or device may be included either.

The following will describe the technical solutions in embodiments of the present disclosure with reference to the accompanying drawings.

It may be noted that, for convenience of description, in embodiments of the present disclosure, the same reference signs denote the same components, and for brevity, in different embodiments, detailed description of the same components is omitted.

Sodium iron phosphate pyrophosphate Na₄Fe₃(PO₄)₂(P₂O₇) has a three-dimensional sodium-ion diffusion channel and a sodium superionic conductor structure. The Sodium iron phosphate pyrophosphate Na₄Fe₃(PO₄)₂(P₂O₇) has the characteristics such as a high voltage plateau, a high capacity, an excellent rate, and outstanding cycling stability, and holds significant potential as a positive electrode material for large-scale production in sodium-ion batteries. However, the compacted density of the existing Na₄Fe₃(PO₄)₂(P₂O₇) remains relatively low.

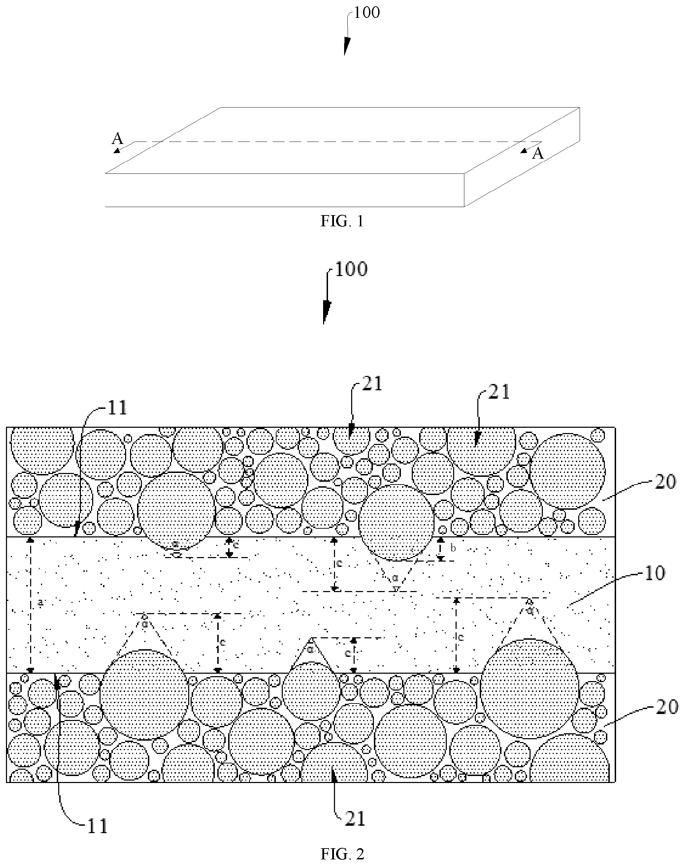

FIG. 1 is a schematic structural diagram of a positive electrode according to an embodiment of the present disclosure, and FIG. 2 is a schematic cross-sectional diagram of a positive electrode according to an embodiment of the present disclosure, taken along a direction A-A in FIG. 1.

Please refer to FIGS. 1 and 2, embodiments of the present disclosure provide a positive electrode 100. The positive electrode 100 includes a positive current collector 10 and a positive active layer 20. The positive current collector 10 has a preset surface 11. The positive active layer 20 is disposed on the preset surface 11 of the positive current collector 10. The positive active layer 20 includes positive electrode particles 21, and the positive electrode particles 21 are partially embedded into the positive current collector 10. The positive electrode particles 21 are made from sodium iron phosphate pyrophosphate (Na₄Fe₃(PO₄)₂(P₂O₇)). The positive electrode particles 21 are spheroidal or spherical. The positive electrode 100 satisfies a relationship: *b*≤*c*•*α*/180°. *b* denotes a depth to which the positive electrode particles 21 are embedded into the positive current collector 10, *α* denotes an included angle between tangents at two points farthest away from each other on an intersection line of the preset surface 11 and a surface of each of the positive electrode particles 21 partially embedded into the positive current collector 10, and c denotes a distance between an intersection of the tangents at two points farthest away from each other on the intersection line of the preset surface 11 and the surface of each of the positive electrode particles 21 partially embedded into the positive current collector 10 and the preset surface 11.

The positive electrode 100 in embodiments of the present disclosure may be applied to a battery, such as a sodium-ion battery.

It can be understood that, the positive active layer 20 includes multiple positive electrode particles 21, some of the multiple positive electrode particles 21 are closer to the positive current collector 10, and some of the multiple positive electrode particles 21 are facing away from the positive current collector 10. Among positive electrode particles 21 that are closer to the positive current collector 10, some positive electrode particles 21 are partially embedded into the positive current collector 10.

It may be noted that the "preset surface 11" may be one or more surfaces of all surfaces of the positive current collector 10, and may also be a part of one surface of the positive current collector 10. For example, the positive active layer 20 covers a part of each of two opposite surfaces of the positive current collector 10. In the schematic diagram of this embodiment, for illustrative purpose, the preset surface 11 are two opposite surfaces of the positive current collector 10, which may not be understood as a limitation to the positive electrode 100 provided in embodiments of the present disclosure.

In an embodiment, the positive current collector 10 is stacked on the positive active layer 20, and the positive active layer 20 is stacked on one or both of two opposite surfaces of the positive current collector 10.

In an embodiment, the material of the positive current collector 10 may be, but is not limited to, at least one of aluminum foil, aluminum sheet, or the like.

In an embodiment, the positive active layer 20 further includes a positive electrode conductive agent, a positive electrode binder, a positive electrode thickener, or the like.

It can be understood that, the positive electrode 100 satisfies the relationship: *c*•*α*/*b* ≥ 180°. Specifically, *c*•*α*/*b* may be, but is not limited to 180°, 195°, 210°, 225°, 240°, 255°, 270°, 285°, 300°, etc. If *c*•*α*/*b* is too small, the positive electrode particles 21 protrude excessively when being embedded into the positive current collector 10, and a crack is likely to occur at the embedded foil of the positive electrode particles 21 and the positive current collector 10, so that the positive electrode 100 is likely to be fractured during the winding process.

In an embodiment, *c* > *b.*

In embodiments of the present disclosure, the positive electrode particles 21 of the positive electrode 100 are partially embedded into the positive current collector 10. The positive electrode particles 21 are embedded into the positive current collector 10 to occupy part of the space of the positive current collector 10, and the positive electrode particles 21 are more compact, thereby improving the compacted density of the positive electrode 100. In addition, due to the compression exerted by the positive active layer 20, the positive current collector 10 is denser, and the compacted density of the positive electrode 100 is improved, so that the positive electrode 100 has a higher energy density and capacity per gram, and the resistance of the positive electrode 100 is reduced. In addition, the shape and protruding extent of the positive electrode particles 21 embedded into the positive current collector 10 will have a great influence on the winding process of the positive electrode 100. When part of the positive electrode particles 21 embedded into the positive current collector 10 are in irregular shapes and protrude relatively, tip cracks will be formed at the embedded foils (i. e. the positions where the positive current collector 10 are embedded), so that the positive electrode 100 is likely to be fractured during the winding process. In the present disclosure, spheroidal or spherical sodium iron phosphate pyrophosphate particles are prepared, and the positive electrode 100 satisfies the relationship: *b* ≤ c•α/180°, so that the positive electrode 100 has a higher compacted density. In addition, part of the positive electrode particles 21 embedded into the positive current collector 10 will not protrude excessively. In this way, tip cracks at the positions where the positive electrode particles 21 are embedded into the positive current collector 10 can be better prevented, so that the positive current collector 10 is less likely to be fractured during the winding process, which results in a better winding process.

In some embodiments, the positive electrode 100 further satisfies the relationship *b*/*a*≤1/3, where *a* denotes a thickness of the positive current collector 10. That is, the ratio *b*/*a* of the depth *b* to which the positive electrode particles 21 are embedded into the positive current collector 10 to the thickness *a* of the positive current collector 10 satisfies: *b*/*a*≤1/3.

Specifically, *b*/*a* may be, but is not limited to, 0.03, 0.05, 0.1, 0.13, 0.15, 0.18, 0.2, 0.23, 0.25, 0.28, 0.3, 0.33, etc.

In this embodiment, when *b*/*a* is too great, the depth to which the positive electrode particles 21 are embedded into the positive current collector 10 is too large, so that part the positive current collector 10 where the positive electrode particles 21 are embedded is too thin, thereby reducing the mechanical performance of the positive electrode 100, and making the positive electrode 100 brittle. In this case, the positive electrode 100 is prone to brittle fracture in the winding process, which is not beneficial to the winding and the subsequent preparation of the positive electrode 100.

In an embodiment, the thickness *a* of the positive current collector 10 satisfies 10 µm≤*a*≤18 µm. Specifically, the thickness *a* of the positive current collector 10 may be, but is not limited to, 10 µm, 11 µm, 12 µm, 13 µm, 14 µm, 15 µm, 16 µm, 17 µm, 18 µm, or the like. If the thickness *a* of the positive current collector 10 is too small, the mechanical strength of the positive current collector 10 is reduced. If the thickness *a* of the positive current collector 10 is too large, the internal resistance of the battery is increased, thereby leading to the energy loss and reduced efficiency of the battery.

In some embodiments, the depth *b* to which the positive electrode particles 21 are embedded into the positive current collector 10 satisfies: *b*≤6 µm.

Specifically, the depth *b* to which the positive electrode particles 21 are embedded into the positive current collector 10 may be, but is not limited to, 0.5 µm, 1 µm, 2 µm, 3 µm, 4 µm, 5 µm, 6 µm, or the like.

In this embodiment, if the depth *b* to which the positive electrode particles 21 are embedded into the positive current collector 10 is too small, the improvement of the compacted density of the positive electrode 100 is limited. If the depth *b* to which the positive electrode particles 21 are embedded into the positive current collector 10 is too large, part of the positive current collector 10 at the embedded position of the positive electrode particles 21 is likely to be too thin, thereby reducing the mechanical performance of the positive electrode 100, and making the positive electrode 100 brittle. In this case, the positive electrode 100 is prone to brittle fracture in the winding process, which is not beneficial to the winding and the subsequent preparation of the positive electrode 100.

Further, the depth *b* to which the positive electrode particles 21 are embedded into the positive current collector 10 satisfies: 1 µm≤*b*≤6 µm. In this way, the positive electrode 100 can have a higher compacted density and better mechanical strength, which facilitates winding and subsequent preparation of the positive electrode 100.

In some embodiments, an included angle *α* between tangents at two points farthest away from each other on an intersection line of the preset surface 11 and the surface of each of the positive electrode particles 21 partially embedded into the positive current collector 10 satisfies 45°≤α≤120°.

Specifically, the included angle *α* between tangents at two points farthest away from each other on an intersection line of the preset surface 11 and the surface of each of the positive electrode particles 21 partially embedded into the positive current collector 10 may be, but is not limited to 45°, 50°, 55°, 60°, 65°, 70°, 75°, 80°, 85°, 90°, 95°, 100°, 105°, 110°, 115°, 120°, etc.

In this embodiment, if the included angle *α* between tangents at two points farthest away from each other on an intersection line of the preset surface 11 and the surface of each of the positive electrode particles 21 partially embedded into the positive current collector 10 is too small, when the positive electrode particles 21 are embedded into the positive current collector 10, the indentation caused on the positive current collector 10 is more abrupt and less continuous, which reduces the bending strength of the positive current collector 10 and is not conducive to the subsequent winding of the positive electrode 100. If the angle *α* between tangents at two points farthest away from each other on an intersection line of the preset surface 11 and the surface of each of the positive electrode particles 21 partially embedded into the positive current collector 10 is too large, the depth to which the positive electrode particle 21 are embedded into the positive current collector 10 is too small, the embedding into the positive current collector 10 is not obvious, and the improvement of the compacted density of the positive electrode 100 is limited.

In some embodiments, a distance c between an intersection of the tangents at two points farthest away from each other on the intersection line of the preset surface 11 and the surface of each of the positive electrode particles 21 partially embedded into the positive current collector 10 and the preset surface 11 satisfies: c≤18 µm.

Specifically, the distance c between an intersection of the tangents at two points farthest away from each other on the intersection line of the preset surface 11 and the surface of each of the positive electrode particles 21 partially embedded into the positive current collector 10 and the preset surface 11 may be, but is not limited to, 1 µm, 2 µm, 3 µm, 4 µm, 5 µm, 6 µm, 8 µm, 10 µm, 12 µm, 14 µm, 16 µm, 18 µm, etc.

In this embodiment, if the distance c between an intersection of the tangents at two points farthest away from each other on the intersection line of the preset surface 11 and the surface of each of the positive electrode particles 21 partially embedded into the positive current collector 10 and the preset surface 11 is too small, the depth to which the positive electrode particle 21 are embedded into the positive current collector 10 is too small, and the improvement of the compacted density of the positive electrode 100 is limited. If the distance c between an intersection of the tangents at two points farthest away from each other on the intersection line of the preset surface 11 and the surface of each of the positive electrode particles 21 partially embedded into the positive current collector 10 and the preset surface 11 is too large, the depth to which the positive electrode particles 21 are embedded into the positive current collector 10 is too large, thereby reducing the mechanical performance of the positive electrode 100, and making the positive electrode 100 brittle. In this case, the positive electrode 100 is prone to prone to brittle fracture in the winding process, which is not beneficial to the winding and the subsequent preparation of the positive electrode 100.

Further, the distance c between an intersection of the tangents at two points farthest away from each other on the intersection line of the preset surface 11 and the surface of each of the positive electrode particles 21 partially embedded into the positive current collector 10 and the preset surface 11 satisfies: 1 µm≤*c*≤17 µm. In this way, the positive electrode 100 can have a higher compacted density and higher mechanical performance at the same time.

Furthermore, the distance c between an intersection of the tangents at two points farthest away from each other on the intersection line of the preset surface 11 and the surface of each of the positive electrode particles 21 partially embedded into the positive current collector 10 and the preset surface 11 satisfies: 2µm≤*c*≤15µm. In this way, the positive electrode 100 can have a higher compacted density and higher mechanical performance at the same time.

In some embodiments, the average sphericity of the positive electrode particles 21 is greater than or equal to 0.9.

In embodiments of the present disclosure, when a numerical range from *m* to *n* is mentioned, if it is not specified, the numerical range means that the numerical value may be any numerical value from *m* to *n,* including an end point numerical value *m* and an end point numerical value *n*.

The sphericity in the present disclosure is calculated by means of the following method. Two mathematical circles are drawn for spherised Na₄Fe₃(PO₄)₂(P₂O₇) particles (positive electrode particles 21), one is a minimum circumcircle of Na₄Fe₃(PO₄)₂(P₂O₇) (the radius thereof is R1), and the other is a maximum inscribed circle of Na₄Fe₃(PO₄)₂(P₂O₇) (the radius thereof is R2), the sphericity of the particle = R1/R2. Take *n* (for example, taking 100 or more from a scanning electron microscope (SEM) image) particles, and then the average sphericity (i.e., degree of sphericility) of the particles is calculated.

As can be appreciated, the average sphericity of the positive electrode particles 21 ranges from 0.9 to 1.

Specifically, the average sphericity of the positive electrode particles 21 may be, but is not limited to, 0.9, 0.91, 0.92, 0.93, 0.94, 0.95, 0.96, 0.97, 0.98, 0.99, 1, or the like.

When the positive electrode 100 is prepared, the positive electrode particles 21 need to be slurried and coated on the positive current collector 10, and then the positive electrode 100 is rolled. When the sphericity of the positive electrode particles 21 is excessively low, the positive electrode particles 21 of lower sphericity have protruding edges and corners, which may hinder the movement and rolling of the positive electrode material during the winding process, and thus may cause a part of the positive electrode particles 21 to be stuck in a local area. Finally, the surface of the positive electrode 100 will be cracked or even fractured, thereby reducing the processing performance and compacted density of the positive electrode material. In this embodiment, the positive electrode particles 21 have a high average sphericity. When the positive electrode particles 21 are used to prepare the positive electrode 100, the positive electrode particles 21 of higher sphericity are likely to move during the rolling of the positive electrode 100, and the positive electrode particles 21 will be more evenly deposited on the positive current collector 10 of the positive electrode 100. In addition, small positive electrode particles 21 are more easily moved to the gaps of large positive electrode particles 21, and the particles may be more densely packed, so that the positive electrode 100 has a higher compacted density and better processing performance.

In some embodiments, the molar ratio of a sodium element to an iron element Na/Fe in the positive electrode particle 21 satisfies 1.34 ≤ Na/Fe ≤ 1.5.

It may be noted that, the molecular formula Na₄Fe₃(PO₄)₂(P₂O₇) of the sodium iron phosphate pyrophosphate of the present disclosure is merely a theoretical molecular formula obtained according to the valence state of each element, the ratio of the sodium element to the iron element and the ratio of the sodium element to the phosphorus element in the positive electrode particles 21 in the present disclosure should not be understood as the quantitative ratio in the molecular formula. The ratio of the sodium element to the iron element, and the ratio of the iron element to the phosphorus element in the positive electrode particle 21 of the present disclosure is based on the specific description in the corresponding embodiment of the present disclosure, and the molecular formula should not be construed as a limitation to the composition of specific elements of the sodium iron phosphate pyrophosphate positive electrode material of the present disclosure.

Specifically, the molar ratio Na/Fe of the sodium element to the iron element in the positive electrode particle 21 may be, but is not limited to, 1.36, 1.37, 1.38, 1.39, 1.40, 1.41, 1.42, 1.43, 1.44, 1.45, 1.46, 1.47, 1.48, 1.49, 1.5, or the like.

In this embodiment, if the molar ratio Na/Fe of the sodium element to the iron element in the positive electrode particle 21 is too large, a sodium iron pyrophosphate impurity phase will be easily formed in the preparation process of the positive electrode particle 21, thereby reducing the capacity per gram of the positive electrode particle 21. In addition, the sodium iron pyrophosphate impurity phase does not match the sodium iron phosphate pyrophosphate (Na₄Fe₃(PO₄)₂(P₂O₇)) primary phase, thereby reducing the sphericity of the prepared positive electrode particle 21. If the molar ratio Na/Fe of the sodium element to the iron element in the positive electrode particle 21 is too small, a sodium iron phosphate impurity phase is easily formed in the preparation process of the positive electrode particle 21, thereby reducing the capacity per gram of the sodium iron phosphate pyrophosphate positive electrode particle 21. In addition, the sodium iron phosphate impurity phase does not match the sodium iron phosphate dipyrophosphate primary phase, thereby reducing the sphericity of the prepared sodium iron phosphate dipyrophosphate positive electrode particle 21. When the molar ratio Na/Fe of the sodium element to the iron element in the positive electrode particle 21 satisfies: 1.34≤Na/Fe≤1.5, the amount of the sodium iron pyrophosphate impurity phase and the sodium iron phosphate impurity phase in the positive electrode particle 21 may be as small as possible, so that the positive electrode particle 21 has a higher sphericity, thereby having a higher compacted density and processing performance.

In some embodiments, the molar ratio Fe/P of the iron element to a phosphorus element in the positive electrode particles 21 satisfies: 0.70 ≤ Fe/P ≤ 0.745.

Specifically, the molar ratio Fe/P of the iron element to the phosphorus element in the positive electrode particle 21 may be, but is not limited to, 0.70, 0.705, 0.71, 0.715, 0.72, 0.725, 0.73, 0.735, 0.74, 0.745, or the like.

In this embodiment, if the molar ratio Fe/P of the iron element to the phosphorus element in the positive electrode particle 21 is too small, insufficient iron in the positive electrode particle 21 will easily lead to an inactive impurity phase in the positive electrode particle 21, thereby not only reducing the capacity per gram of the positive electrode particle 21, but also reducing the sphericity of the positive electrode particle 21, so that the compacted density of the positive electrode 100 is reduced. If the molar ratio Fe/P of the iron element to the phosphorus element in the positive electrode particle 21 is too large, inactive iron in the positive electrode particle 21 increases, thereby reducing the volume energy density and mass energy density of the positive electrode particle 21, and reducing the capacity per gram of the battery when the positive electrode particle 21 is applied to the battery. In addition, increasing in the inactive iron impurity phase also reduces the sphericity of the positive electrode particle 21, thereby reducing the compacted density of the positive electrode 100.

The amounts of the iron element, the sodium element, and the phosphorous element in embodiments of the present disclosure may be measured by an inductively coupled plasma optical emission spectrometer (ICP-OES).

The compacted density of the positive electrode 100 of sodium iron phosphate pyrophosphate in embodiments of the present disclosure is from 2.15 g/cm³ to 2.45 g/cm³. Specifically, the compacted density of the sodium iron phosphate pyrophosphate positive electrode 100 may be, but is not limited to, 2.15 g/cm³, 2.2 g/cm³, 2.25 g/cm³, 2.3 g/cm³, 2.35 g/cm³, 2.4 g/cm³, 2.45 g/cm³, etc.

In embodiments of the present disclosure, the positive electrode 100 has a mass specific capacity ranging from 108mAh/g to 112mAh/g at 0.1C. Specifically, the mass specific capacity of the positive electrode 100 at 0.1C may be, but is not limited to, 108 mAh/g, 109 mAh/g, 110 mAh/g, 111 mAh/g, 112 mAh/g, or the like.

In embodiments of the present disclosure, the resistance of the positive electrode 100 ranges from 40 mΩ to 100 mΩ. Specifically, the resistance of the positive electrode 100 may be, but is not limited to, 40 mΩ, 50 mΩ, 60 mΩ, 70 mΩ, 80 mΩ, 90 mΩ, 100 mΩ, or the like. Insofar as the formula of the positive electrode 100 is fixed, the resistivity of the positive electrode 100 is generally a fixed value, and the relationship of the resistance and the resistivity is: resistance = resistivity × thickness/area. Under the condition of the same load, the positive electrode 100 of a higher compacted density is thinner, and under the condition of the same area of the positive electrode 100, the resistance of the positive electrode 100 is smaller.

The peel strength of the positive electrode 100 in embodiments of the present disclosure ranges from 7 N/m to 12 N/m. Specifically, the peel strength of the positive electrode 100 may be, but is not limited to, 7 N/m, 8 N/m, 9 N/m, 10 N/m, 11 N/m, 12 N/m, etc. In the present disclosure, some of the positive electrode particles 21 of the positive electrode 100 are embedded into the positive current collector 10, so that the positive active layer 20 has a larger contact area with the positive current collector 10, and thus the positive electrode 100 has a higher peel strength.

Peel strength testing standard operating procedure (SOP) is as follows. The positive electrode 100 is cut into a strip of 25 mm in width and over 20 cm in length. A 3M double-sided adhesive tape with a size of 20 mm × 100 mm is adhered to the middle of a steel plate, leaving the rear third of the steel plate blank. The cut positive electrode 100, with both sides slightly wider than the 3M double-sided adhesive tape, is attached in parallel to the other side of the 3M double-sided adhesive tape. The positive electrode 100 is manually peeled from the bottom to the middle, and is a tensile force teste is conducted with a tensile testing machine at a stretching speed of 50 mm/min. After testing, the value of the peel strength can be obtained.

The positive electrode 100 in embodiments of the present disclosure may be prepared by using the method described in the following embodiments of the present disclosure, and may also be prepared by using other methods. The preparation method in embodiments of the present disclosure is merely one or more preparation methods of the positive electrode 100 in the present disclosure, and shall not be construed as a limitation to the positive electrode 100 provided in embodiments of the present disclosure.

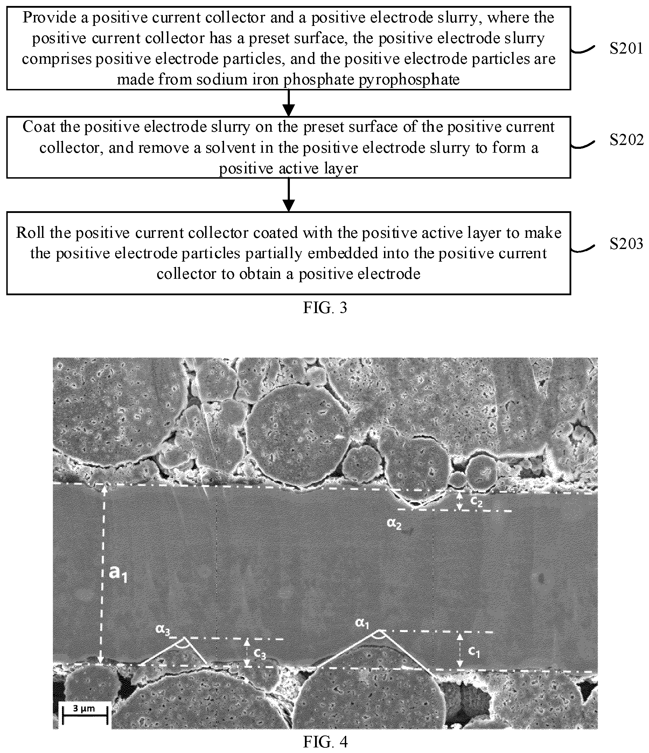

FIG. 3 is a schematic flowchart of a preparation method of the positive electrode 100 according to an embodiment of the present disclosure.

Referring to FIG. 3, an embodiment of the present disclosure further provides a method for preparing a positive electrode 100. The method includes the following.

S201, a positive current collector 10 and a positive electrode slurry are provided. The positive current collector 10 has a preset surface 11, the positive electrode slurry includes positive electrode particles 21, and the positive electrode particles 21 are made from sodium iron phosphate pyrophosphate.

In an embodiment, the positive electrode particles 21, a positive electrode conductive agent, a positive binder, and a solvent are mixed evenly in a tank mixer to obtain the positive electrode slurry.

In an embodiment, the positive electrode conductive agent may be, but is not limited to, at least one of acetylene black, conductive carbon black (Super P), carbon nanotubes, graphene, or the like.

In an embodiment, the positive electrode binder may be, but is not limited to, polyvinylidene difluoride (PVDF).

In an embodiment, the solvent may be, but is not limited to, N-methylpyrrolidone (NMP).

S202, the positive electrode slurry is coated on the preset surface 11 of the positive current collector 10, and the solvent in the positive electrode slurry is removed to form the positive active layer 20.

In an embodiment, the positive electrode slurry is coated on the upper and lower surfaces (i. e. the preset surface 11) of the positive current collector 10, and then the positive current collector 10 coated with the positive electrode slurry is dried in an oven to remove the solvent in the positive electrode slurry, so as to obtain the positive active layer 20.

In an embodiment, a drying temperature may be 80°C to 120°C. Specifically, the drying temperature may be, but is not limited to 80°C, 90°C, 100°C, 110°C, 120°C, or the like.

In an embodiment, the drying is performed in a vacuum state, that is, in a negative pressure state.

In an embodiment, a coating thickness of the positive electrode slurry ranges from 100 µm to 300 µm. Specifically, the coating thickness of the positive electrode slurry is 100 µm, 130 µm, 150 µm, 180 µm, 200 µm, 230 µm, 250 µm, 280 µm, 300 µm, or the like. If the coating thickness of the positive electrode slurry is too small, the areal loading of the positive electrode 100 is too small, so that the areal specific capacity of the positive electrode 100 is too small. If the coating thickness of the positive electrode slurry is too large, the mechanical performance of the positive electrode 100 is deteriorated, so that the positive electrode 100 is prone to slag shedding.

S203, the positive current collector 10 coated with the positive active layer 20 is rolled, so that the positive electrode particles 21 are partially embedded into the positive current collector 10 to obtain the positive electrode 100;

The positive electrode 100 satisfies the relationship: *b* < *c* • α/180°

b denotes a depth to which the positive electrode particles 21 are embedded into the positive current collector 10, *α* denotes an included angle between tangents at two points farthest away from each other on an intersection line of the preset surface 11 and the surface of each of the positive electrode particles 21 partially embedded into the positive current collector 10, and c denotes a distance between an intersection of the tangents at two points farthest away from each other on the intersection line of the preset surface 11 and the surface of each of the positive electrode particles 21 partially embedded into the positive current collector 10 and the preset surface 11.

In an embodiment, the mass fraction of the positive electrode particles 21 in the positive active layer 20 ranges from 88% to 97%. Specifically, the mass fraction of the positive electrode particles 21 in the positive active layer 20 may be, but is not limited to, 88%, 89%, 90%, 91%, 92%, 93%, 94%, 95%, 96%, 97%, or the like. If the mass fraction of the positive electrode particles 21 in the positive active layer 20 is too small, it indicates that the contents of the positive electrode conductive agent and the positive electrode binder are excessive, and the proportion of the active materials in the positive electrode 100 and the compacted density are reduced. If the mass fraction of the positive electrode particles 21 in the positive active layer 20 is too large, the contents of the positive electrode conductive agent and the positive electrode binder are too small, so that the conductivity of the positive electrode 100 is reduced, and the adhesion between the positive current collector 10 and the positive active layer 20 is reduced, which will result in that the positive electrode 100 is likely to be layered when being wound, thereby reducing the mechanical performance of the positive electrode 100.

Further, the mass fraction of the positive active layer 20 of the positive electrode particles 21 ranges from 93% to 96%, so that the positive active layer 100 has a higher compacted density and energy density, and has a good electrical conductivity and mechanical performance.

The positive electrode particles 21 of the positive electrode 100 prepared by using the preparation method of the positive electrode 100 in embodiments of the present disclosure are partially embedded into the positive current collector 10. The positive electrode particles 21 are embedded into the positive current collector 10 to occupy part of the space of the positive current collector 10, and the positive electrode particles 21 are more compact, thereby improving the compacted density of the positive electrode 100. In addition, due to the compression exerted by the positive active layer 20, the positive current collector 10 is denser, and the compacted density of the positive electrode 100 is improved, so that the positive electrode 100 has a higher energy density and capacity per gram, and the resistance of the positive electrode 100 is reduced. In addition, the shape and protruding extent of the positive electrode particles 21 embedded into the positive current collector 10 will have a great influence on the winding process of the positive electrode 100. When part of the positive electrode particles 21 embedded into the positive current collector 10 are in irregular shapes and protrude relatively, tip cracks will be formed at the embedded foils (i. e. the positions where the positive current collector 10 are embedded), so that the positive electrode 100 is likely to be fractured during the winding process. In the present disclosure, spheroidal or spherical sodium iron phosphate pyrophosphate particles are prepared, and the positive electrode 100 satisfies the relationship: *b* ≤ c•α/180°, so that the positive electrode 100 has a higher compacted density, part of the positive electrode particles 21 embedded into the positive current collector 10 will not protrude excessively. In this way, tip cracks at the positions where the positive electrode particles 21 are embedded into the positive current collector 10 can be better prevented, so that the positive current collector 10 is less likely to be fractured during the winding process, and has a better winding process.

In some embodiments, the positive current collector 10 coated with the positive active layer 20 is rolled to make the positive electrode particles 21 partially embedded into the positive current collector 10 to obtain the positive electrode 100 as follows. The positive current collector 10 coated with the positive active layer 20 is rolled with a rolling pressure P satisfying 70 tons ≤ P ≤ 150 tons, so that the positive electrode particles 21 are partially embedded into the positive current collector 10 to obtain the positive electrode 100.

In particular, the rolling pressure P may be, but is not limited to, 70 tons, 80 tons, 90 tons, 100 tons, 105 tons, 110 tons, 115 tons, 120 tons, 130 tons, 140 tons, 150 tons, etc.

In the present embodiment, if the rolling pressure is too small, a portion of the positive electrode particles 21 embedded into the positive current collector 10 is too small, or even not embedded into the positive current collector 10, and it is difficult to effectively increase the compacted density of the positive current collector 10. If the rolling pressure is too large, excessive positive electrode particles 21 are embedded into the positive current collector 10, so that the processing performance of the positive electrode 100 becomes poor, and the positive electrode 100 becomes brittle, which is not conducive to the subsequent winding and processing of the positive electrode 100. In addition, if the rolling pressure is too large, and the compacted density of the positive electrode 100 is too large, so that it is difficult for the electrolyte to infiltrate, thereby reducing the capacity. In this embodiment, by using the plasticity and relatively low compressive strength of the positive current collector 10, and better sphericity, high hardness and compressive strength of the positive electrode particles 21, and by increasing the rolling pressure, the obtained positive electrode 100 has a high compacted density, a higher areal specific capacity, a lower resistance, and a higher peel strength, and furthermore, has better mechanical performance and processing performance.

Further, the rolling pressure P satisfies 100 tons ≤ *P* ≤ 120 tons, which enables the positive electrode 100 to have a higher compacted density and better mechanical performance and processing performance.

The positive electrode 100 according to embodiments of the present disclosure will be further described below with reference to specific embodiments.

### Embodiments 1 to 5

The positive electrode 100 in the present embodiment is prepared by the following operations.
(1) 1.9 kg of Na₄Fe₃(PO₄)₂(P₂O₇) powder, 50 g of conductive carbon black (Super P, a positive electrode conductive agent), 50 g of polyvinylidene fluoride (PVDF, a positive electrode binder), and 5 kg of N-methyl pyrrolidone (NMP, a solvent) are stirred to form a uniform positive electrode slurry, and an aluminum foil is provided as a positive current collector 10.
(2) the positive electrode slurry is coated on the upper and lower surfaces of the positive current collector 10, where the coating thickness of the positive electrode slurry on each surface is 200 µm.
(3) the positive current collector 10 coated with the positive electrode slurry is dried in a vacuum oven for 24 hours at a temperature of 105°C, so as to obtain the positive current collector 10 coated with the positive active layer 20.
(4) The positive current collector 10 coated with the positive active layer 20 was rolled with a two-roll calender, and the rolling pressures in various embodiments are shown in Table 1 below.

After the positive electrode 100 of embodiment 1 is cut, a scanning electron microscope (SEM) image of the cut surface is illustrated in FIG. 4. As can be seen from FIG. 4, the positive electrode particles 21 of the present disclosure are partially embedded into the positive current collector 10.

### Comparative Example 1

This comparative example differs from embodiment 1 in that the rolling pressure is 30 tons.

### Comparative example 2

This comparative example differs from embodiment 1 in that the rolling pressure is 200 tons.

### Comparative Example 3

This comparative example differs from embodiment 1 in that the mass fraction of the positive electrode particles 21 in the positive active layer 20 is 80%.

### Comparative Example 4

This comparative example differs from embedment 1 in that the mass fraction of the positive electrode particles 21 in the positive active layer 20 is 99%.

### Comparative Example 5

The present comparative example differs from embodiment 1 in that the coating thickness of the positive electrode slurry is 50 µm.

### Comparative Example 6

The present comparative example differs from embodiment 1 in that the coating thickness of the positive electrode slurry is 400 µm.

### Comparative Example 7

The present comparison example differs from embodiment 1 in that the positive electrode particles 21 are non-spherical, and *b*>*c*•*α*/180°.

The positive electrodes 100 of various embodiments and comparative examples were subject to various performance tests, and the test results are shown in Tables 1 and 2 below.
(1) compacted density test method for the positive electrode 100 is as follows. The thickness and mass of an aluminum foil circular sheet having a diameter of 12 mm (the positive current collector 10) are measured. The thickness of the positive electrode 100 prepared with the positive electrode active material of each of embodiments and comparative examples is then measured and the positive electrode 100 was cut into a 12 mm circular sheet and the 12 mm circular sheet is weighed. Thus, the mass and volume of the positive electrode active material in the positive electrode 100 are calculated, and then the compacted density of the positive electrode 100 prepared with the positive electrode active material is calculated.
(2) a method for testing the mass specific capacity of the positive electrode 100 is as follows. The positive electrode 100 is cut into a circular sheet having a diameter of 12 mm, and the circular sheet having the diameter of 12 mm is weighted, so as to obtain the mass of the positive electrode active material by subtracting the mass of the positive current collector 10. The cut circular sheet of the positive electrode 100 is assembled into a buckle battery using a buckle electric shell of model 2032 (in which a 14 mm metal sodium sheet serves as a negative electrode, 1 M NaClO₄ which is dissolved in ethylene carbonate/diethyl carbonate (EC/DEC) serves as an electrolyte, and a glass fiber separator serves as a separator). The test procedure is as follows: the buckle battery stands for 10 hours, is charged to 3.5 V at a rate of 0.1 C, stands for 10 min, and then is discharged to 1.5 V at a rate of 0.1 C, so as to obtain the mass specific capacity.
(3) the areal specific capacity of the positive electrode 100 = mass specific capacity × the mass of the positive electrode active material ÷1.131.
(4) peel strength test: the positive electrode 100 is cut into a strip of 25 mm in width and over 20 cm in length. A 3M double-sided adhesive tape of 20 mm × 100 mm is adhered to the middle of a steel plate, leaving the rear third of the steel plate blank. The cut positive electrode 100, with both sides slightly wider than the 3M double-sided adhesive tape, is attached to the other side of 3M double-sided adhesive tape in parallel. The positive electrode 100 is manually peeled from the bottom to the middle, and the tensile force is tested with a tensile testing machine at a stretching rate of 50 mm/min. After testing, the value of the peel strength can be obtained.

**Table 1 Performance parameters of the positive electrode 100 of each of embodiments and comparative examples**

| example | shape of positive electrode particles | rolling presser (ton) | mass fraction of positive electrode particles (%) | coating thickness (µm) | compacted density of positive electrode (g/cm³) | mass specific capacity ( mAh/g) | areal specific capacity (mAh/cm²) |
|---|---|---|---|---|---|---|---|
| embodiment 1 | | 110 | 96 | 200 | 2.4 | 112 | 11 |
| embodiment 2 | | 70 | 96 | 200 | 2.15 | 112 | 9.85 |
| embodiment 3 | | 90 | 96 | 200 | 2.28 | 112 | 10.45 |
| embodiment 4 | | 130 | 96 | 200 | 2.44 | 104 | 10.38 |
| embodiment 5 | | 150 | 96 | 200 | 2.47 | 92 | 9.3 |
| comparative example1 | spheroidal *b*≤*c*•*α*/180° | 30 | 96 | 200 | 2.0 | 112 | 9.7 |
| comparative example2 | | 200 | 96 | 200 | 2.42 | 101 | 9.9 |
| comparative example3 | | 110 | 80 | 200 | 2.25 | 112 | 10.2 |
| comparative example4 | | 110 | 99 | 200 | 2.41 | 105 | 10.1 |
| comparative example5 | | 110 | 96 | 50 | 2.36 | 112 | 2.8 |
| comparative example6 | | 110 | 96 | 400 | 2.38 | 102 | 19 |
| comparative example7 | non-spherical b > c•α/180° | 110 | 96 | 200 | 2.1 | 111 | 10.2 |

**Table 2 Performance parameters of the positive electrode 100 of each of embodiments and comparative examples**

| example | Mechanical/ processing performance | Resistance of positive electrode (mΩ) | Peel strength (N/m) |
|---|---|---|---|
| embodiment 1 | excellent | 60 | 10.2 |
| embodiment 2 | excellent | 100 | 6.2 |
| embodiment 3 | excellent | 82 | 8.7 |
| embodiment 4 | good | 52 | 11.3 |
| embodiment 5 | good | 40 | 12 |
| comparative example1 | good | 180 | 4 |
| comparative example2 | the positive electrode is prone to brittle fracture, and material shedding during winding | 37 | 13 |
| comparative example3 | good | 48 | 14 |
| comparative example4 | the positive electrode is prone to material shedding during winding | 627 | 0.5 |
| comparative example5 | good | 9 | 8 |
| comparative example6 | the positive electrode is prone to brittle fracture, and material shedding during winding | 120 | 6 |
| comparative example7 | the positive electrode is prone to brittle fracture | 43 | 12 |

From Table 1 and Table 2, it can be seen from the test results of embodiments 1 to 5 that the positive electrode 100 in embodiments of the present disclosure has a higher compacted density, a higher mass specific capacity, a higher areal specific capacity, a lower resistance, and a higher peel strength.

It can be seen from the test results of embodiment 1 and comparative example 1 that when the rolling pressure is too small, the compacted density of the positive electrode 100 is greatly reduced, and the mass specific capacity and the areal specific capacity are also greatly reduced. In addition, the resistance of the positive electrode 100 is greatly increased, and the peel strength is reduced.

From the test results of example 1 and comparative example 2, it can be seen that when the rolling pressure is too large, the compacted density of the positive electrode 100 is increased, the resistance is small, and the peel strength is increased. However, the mass specific capacity and the areal specific capacity are slightly reduced, because the rolling pressure is too large, and the compacted density of the positive electrode 100 is too large, which makes it difficult to be infiltrated in the electrolyte, thereby reducing the capacity. In addition, the positive electrode 100 is prone to brittle fracture and material shedding during winding, so that the processing performance is greatly reduced.

It can be seen from the test results of embodiment 1, comparative example 3, and comparative example 4 that when the mass fraction of the positive electrode particles 21 in the positive electrode active layer 20 is too small (comparative example 3), the compacted density and areal specific capacity of the positive electrode active sheet 100 will be reduced, and the resistance and peel strength of the positive electrode active sheet 100 are both slightly increased. When the mass fraction of the positive electrode particles 21 in the positive electrode active layer 20 is too large (comparative example 4), although the compacted density of the positive electrode 100 is slightly increased, the mass specific capacity and the areal specific capacity are both reduced, the resistance of the positive electrode 100 is greatly increased, and the peel strength is greatly reduced. In this case, the positive electrode 100 is prone to material shedding during winding, which is not beneficial to the cycling stability of the positive electrode 100.

From the test results of example 1, comparative example 5, and comparative example 6, it can be seen that when the coating thickness of the positive electrode slurry is too small (comparative Example 5), the area specific capacity of the positive electrode 100 is greatly reduced, and the resistance and peel strength are also reduced. When the coating thickness of the positive electrode slurry is too large (comparative example 6), the mass specific capacity of the positive electrode 100 is reduced, and the areal specific capacity is reduced. However, the positive electrode 100 is prone to brittle fracture and material shedding during winding, the resistance is greatly increased, and the peel strength is also reduced.

It can be seen from the test results of example 1 and comparative example 7 that when the shape of the positive electrode particle 21 is non-spherical, in the case of other conditions being the same, the compacted density of the positive electrode 100 is greatly reduced, and the area specific capacity is also greatly reduced. In addition, the positive electrode 100 is prone to brittle fracture, and the mechanical strength is reduced.

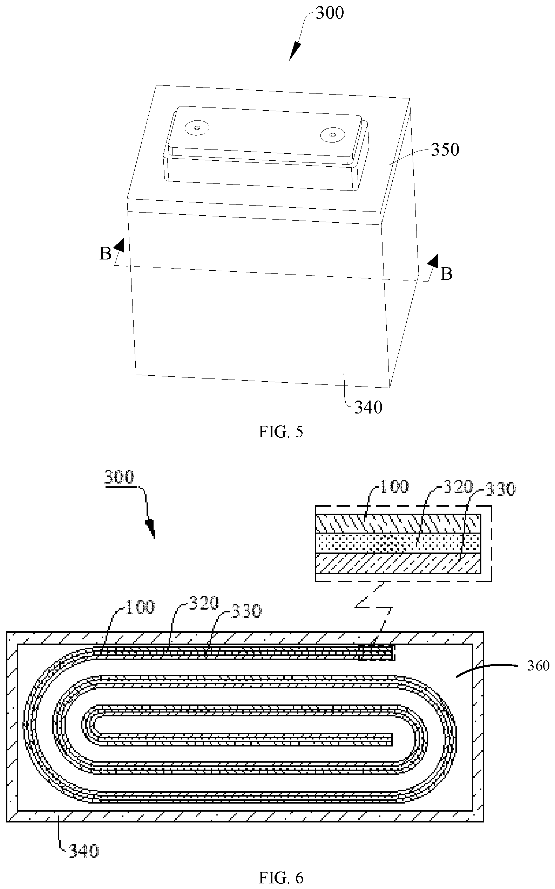

FIG. 5 is a schematic structural diagram of a battery according to an embodiment of the present disclosure, and FIG. 6 is a schematic cross-sectional structural diagram of a battery according to an embodiment of the present disclosure, taken along a direction B-B in FIG. 5.

Referring to FIGS. 5 and 6, embodiments of the present disclosure further provide a battery 300, which includes an electrolyte, the positive electrode 100 in embodiments of the present disclosure, a separator 320, and a negative electrode 330. The positive electrode 100 is immersed in the electrolyte. The separator 320 is located at one side of the positive electrode 100 and is immersed in the electrolyte. The negative electrode 330 is disposed at one side of the separator 320 facing away from the positive electrode 100 and is immersed in the electrolyte.

The battery 300 in embodiments of the present disclosure may be, but not limited to, a sodium-ion battery 300.

In an embodiment, the electrolyte includes a solvent and an electrolyte salt.

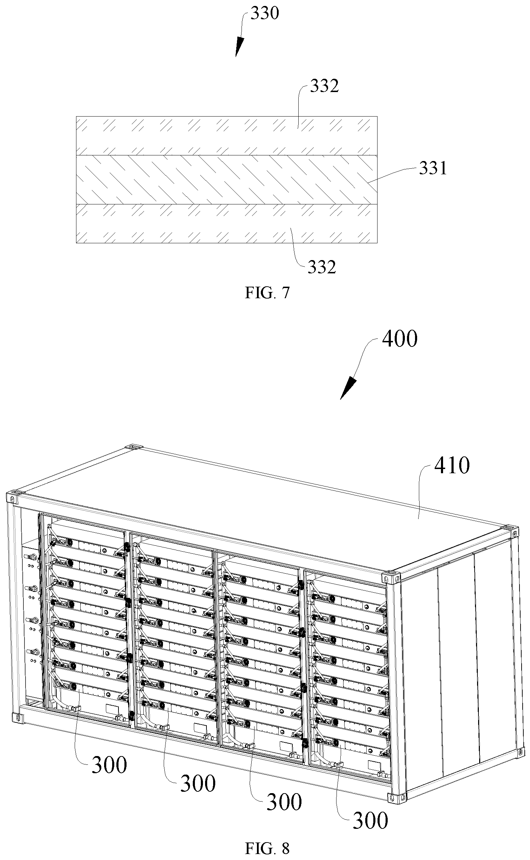

FIG. 7 is a schematic structural diagram of the negative electrode 330 according to an embodiment of the present disclosure.

Please refer to FIG. 7, in an embodiment, the negative electrode 330 includes a negative current collector 331 and a negative active layer 332. The negative current collector 331 may be, but is not limited to, a copper foil or a copper sheet. In an embodiment, the positive active layer 332 includes a negative electrode active material, a second conductive additive, a second binder, a second thickener, and the like.

In an embodiment, the separator 320 may be, but is not limited to, at least one of a polypropylene (PP) film, polyethylene (PE) film, or a ceramic separator 320.

In an embodiment, the battery 300 further includes a housing 340 and an end cover assembly 350. The housing 340 and the end cover assembly 350 cooperatively define a closed accommodating chamber (not illustrated in the figure) for accommodating the electrolyte, the positive electrode 100, the separator 320, and the negative electrode 330. It can be understood that, the end cover assembly 350 is electrically connected to the positive electrode 100 and the negative electrode 330, and the positive electrode 100 and the negative electrode 330 are led out to electrically connect to an external device or another battery 300.

FIG. 8 is a schematic structural diagram of an energy-storage device 400 according to an embodiment of the present disclosure.

Referring to FIG. 8, embodiments of the present disclosure further provide an energy-storage device 400, which includes a case 410 and the battery 300 described in embodiments of the present disclosure, where multiple batteries 300 are accommodated in the case 410.

The energy-storage device 400 of the present disclosure may be applied to, but not limited to, power generation-side energy storage, grid-side energy storage, consumer- side energy storage, and the like.

The term "plurality" or "multiple" means greater than or equal to two.

It can be understood that, the multiple batteries 300 of the energy-storage device 400 may be connected in parallel with one another, or connected in series with one another, or connected in parallel in part and connected in series in part (in other words, mixed), and the connection manner of the multiple batteries 300 in one energy-storage device 400 is not specifically limited in the present disclosure.

It can be understood that, the case 410 has an accommodating cavity (not illustrated), and the multiple batteries 300 are accommodated in the accommodating cavity. In some embodiments, each accommodating cavity accommodates one battery 300. In other embodiments, each accommodation cavity accommodates multiple batteries 300.

In an embodiment, the energy-storage device 400 may include, but is not limited to, a battery module, a battery pack, a battery system, and the like. The actual application form of the energy-storage device 400 provided in embodiments of the present disclosure may be, but is not limited to, the listed products, and may also be in other application forms. Embodiments of the present disclosure do not limit the application form of the energy-storage device 400. For illustrative purpose, the energy-storage device 400 in embodiments of the present disclosure is a multi-core battery 300, which shall not be construed as a limitation to the energy-storage device 400 in embodiments of the present disclosure.

The term "embodiment" or "implementation" referred to herein means that particular features, structures, or characteristics described in conjunction with embodiments may be contained in at least one embodiment of the present disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the spirit and scope of the technical solutions of the present disclosure.

Finally, it may be noted that the foregoing implementations are merely intended to illustrate but not limit the technical solutions of the present disclosure. Although the present disclosure is described in detail with reference to the foregoing optimal embodiments, those of ordinary skill in the art may understand that modifications or equivalent replacements can be made to the technical solutions of the present disclosure without departing from the spirit and scope of the technical solutions of the present disclosure.

## Claims

1. A positive electrode (100), comprising:
a positive current collector (10) having a preset surface (11); and
a positive active layer (20) disposed on the preset surface (11) of the positive current collector (10), the positive active layer (20) comprising positive electrode particles (21) partially embedded into the positive current collector (10), the positive electrode particles (21) being made from sodium iron phosphate pyrophosphate, and the positive electrode particles (21) being spheroidal or spherical;
wherein the positive electrode (100) satisfies a relationship: *b*≤*c*•*α*/180°;
wherein b denotes a depth to which the positive electrode particles (21) are embedded into the positive current collector (10), *α* denotes an included angle between tangents at two points farthest away from each other on an intersection line of the preset surface (11) and a surface of each of the positive electrode particles (21) partially embedded into the positive current collector (10), and c denotes a distance between an intersection of the tangents at two points farthest away from each other on the intersection line of the preset surface (11) and the surface of each of the positive electrode particles (21) partially embedded into the positive current collector (10) and the preset surface (11).

2. The positive electrode (100) of claim 1, wherein the positive electrode (100) further satisfies a relationship: *b*/*a*≤1/3, where *a* denotes a thickness of the positive current collector (10).

3. The positive electrode (100) of claim 1, wherein the depth *b* to which the positive electrode particles (21) are embedded into the positive current collector (10) satisfies: *b*≤6µm.

4. The positive electrode (100) of claim 1, wherein the included angle *α* between the tangents at two points farthest away from each other on the intersection line of the preset surface (11) and the surface of each of the positive electrode particles (21) partially embedded into the positive current collector (10) satisfies: 45° ≤ *α* ≤ 120°.

5. The positive electrode (100) of claim 1, wherein the distance c between the intersection of the tangents at two points farthest away from each other on the intersection line of the preset surface (11) and the surface of each of the positive electrode particles (21) partially embedded into the positive current collector (10) satisfies: *c*≤18µm.

6. The positive electrode (100) of claim 1, wherein an average sphericity of the positive electrode particles (21) is greater than or equal to 0.9.

7. The positive electrode (100) of claim 1, wherein a molar ratio Na/Fe of a sodium element to an iron element in each of the positive electrode particles (21) satisfies: 1.34≤Na/Fe≤1.5.

8. The positive electrode (100) of claim 1, wherein a molar ratio Fe/P of an iron element to a phosphorus element in each of the positive electrode particles (21) satisfies: 0.70 ≤ Fe/P ≤ 0.745.

9. A preparation method of a positive electrode, comprising:
providing a positive current collector and a positive electrode slurry, wherein the positive current collector has a preset surface, the positive electrode slurry comprises positive electrode particles, and the positive electrode particles are made from sodium iron phosphate pyrophosphate;
coating the positive electrode slurry on the preset surface of the positive current collector, and removing a solvent in the positive electrode slurry to form a positive active layer; and
rolling the positive current collector coated with the positive active layer (20) to make the positive electrode particles partially embedded into the positive current collector to obtain a positive electrode;
wherein the positive electrode satisfies a relationship: *b* < *c*•*α*/180°;
wherein *b* denotes a depth to which the positive electrode particles are embedded into the positive current collector, *α* denotes an included angle between tangents at two points farthest away from each other on an intersection line of the preset surface and a surface of each of the positive electrode particles partially embedded into the positive current collector, and c denotes a distance between an intersection of the tangents at two points farthest away from each other on the intersection line of the preset surface and the surface of each of the positive electrode particles partially embedded into the positive current collector and the preset surface.

10. The preparation method of a positive electrode of claim 9, wherein rolling the positive current collector coated with the positive active layer (20) to make the positive electrode particles partially embedded into the positive current collector to obtain the positive electrode comprises:
rolling the positive current collector coated with the positive active layer (20) with a rolling pressure P satisfying 70 tons ≤ *P* < 150 tons to make the positive electrode particles partially embedded into the positive current collector to obtain the positive electrode.

11. A battery (300), comprising:
an electrolyte (360);
a positive electrode (100), wherein the positive electrode (100) is the positive (100)of any one of claims 1 to 8 or the positive electrode (100) prepared by using the preparation method of a positive electrode of claim 9 or 10;
a separator (320) located at one side of the positive electrode (100); and
a negative electrode (330) disposed at one side of the separator facing away from the positive electrode (100).

12. An energy-storage device (400), comprising:
a case (410);
a plurality of batteries (300) of claim 11, wherein the plurality of batteries (300) are accommodated in the case (410).
